# EUROPÄISCHE PATENTANMELDUNG

(11) **EP 4 375 111 A1**
(43) Veröffentlichungstag der Anmeldung: **29.05.2024**
(21) Anmeldenummer: 23205500.4
(22) Anmeldetag: 24.10.2023
(51) Int. Cl.: B60K 35/22, G12B 9/00

(54) **ANZEIGEELEMENT FÜR EIN KRAFTFAHRZEUG MIT NAHTLOSEM BEREICHSÜBERGANG**

(30) Priorität: 22.11.2022 DE 102022130921
(71) Anmelder: Marquardt GmbH, 78604 Rietheim-Weilheim (DE)
(72) Erfinder: ROTTLER, Frank, 78126 Königsfeld (DE)
(74) Vertreter: Staeger & Sperling Partnerschaftsgesellschaft mbB

(57) **Zusammenfassung**

Die Erfindung betrifft ein Anzeigeelement (1) für ein Kraftfahrzeug, aufweisend eine Sichtseite (S) sowie eine davon abgewandte Rückseite (R), ferner aufweisend eine sichtseitige lichtdurchlässige Trägerschicht (2) sowie dazu rückseitig angeordnet eine Randschicht (3) und eine Maskierungsschicht (4), wobei die Randschicht (3) die Maskierungsschicht (4) zumindest teilweise eine Umrandung der Maskierungsschicht (4) bildend umläuft und mit ihr überlappt, sodass an der Sichtseite (S) durch die Maskierungsschicht (4) ein Anzeigebereich (C) und durch die Randschicht (3) ein Randbereich (D) bestimmt werden, welche an der Sichtseite im Bereich ihrer Überlappung (5) einen Übergangsbereich (E) bilden, wobei die Randschicht (3) angrenzend an die Maskierungsschicht (4) einen sich zu der Maskierungsschicht (4) hin von einer ersten Dicke (b) zu einer zweiten Dicke (d) verjüngenden ersten Abschnitt (11) und einen daran anschließenden zweiten Abschnitt (12) zweiter Dicke (d) aufweist, und wobei die Maskierungsschicht (4) zumindest den zweiten Abschnitt (12) wenigstens teilweise überlappt.

## Beschreibung

Die Erfindung betrifft ein Anzeigeelement für ein Kraftfahrzeug mit einer Randschicht und einer Maskierungsschicht, wobei das Anzeigeelement zwischen einem sichtseitigen durch die Randschicht bestimmten Randbereich und einem sichtseitigen durch die Maskierungsschicht bestimmten Anzeigebereich einen Übergangsbereich vorsieht, in welchem der Anzeigebereich und der Randbereich optisch nahezu nahtlos ineinander übergehen.

Bei Displays oder Anzeigeelementen werden oftmals schwarze Rückseiten für die bessere Erkennbarkeit einer Anzeige verwendet. Diese können durch schwarzen Kunststoff, Beschichtungen, Druck oder Ähnliches realisiert werden. Wenn Kombinationen verschiedener Materialien, Schichten oder Elemente genutzt werden, ist es besonders schwierig, die Übergangsbereiche so zu gestalten, dass die Übergänge optisch nicht zu sehen sind.

Dies gilt auch, wenn ein Anzeigeelement einen rückseitig angeordneten Kunststoffrahmen aufweist, welcher mit einer vorzugsweise im Druckverfahren hergestellten Schicht kombiniert wird.

So ist aus dem Stand der Technik eine Vielzahl von Anzeigeelementen bekannt, deren Rückseiten durch unterschiedliche Materialien bzw. Schichten gebildet sind bzw. welche diese rückseitig an einer transparenten Trägerschicht aufweisen. Dabei ist auch bereits bekannt, dass eine Randschicht und eine Maskierungsschicht vorgesehen sind, die aneinander angrenzen oder eine Überlappung miteinander bilden. An der Sichtseite solcher Anzeigeelemente ist jedoch meist kein fließender Übergang vorhanden, sondern vielmehr eine optisch durch das unbewehrte Auge des Betrachters erfassbare und damit ästhetisch wenig ansprechende Grenze oder Kante zwischen einem durch die Randschicht definierten Randbereich und einem durch die Maskierungsschicht definierten Anzeigebereich.

Zwar sind verschiedene Kaschierungslösungen bekannt, diese sind jedoch teilweise aufwändig und damit teuer in der Umsetzung und zudem oftmals an der Sichtseite durch das unbewehrte Auge erfassbar, sodass diese nicht den Ansprüchen an gehobene bzw. hochpreisige Fahrzeuge gerecht werden.

Der Erfindung liegt deshalb die Aufgabe zugrunde, die vorgenannten Nachteile zu überwinden und ein Anzeigeelement für Kraftfahrzeuge bereitzustellen, bei welchem der Übergang zwischen durch verschiedene Materialien bzw. Schichten gebildeten sichtseitigen Bereichen optisch nahezu bzw. vollständig nahtlos und durch das unbewehrte Auge nicht erfassbar ist.

Diese Aufgabe wird durch die Merkmalskombination gemäß Patentanspruch 1 gelöst.

Erfindungsgemäß wird daher ein Anzeigeelement gemäß Anspruch 1 vorgeschlagen, welches eine insbesondere im bestimmungsgemäßen Gebrauch einem Betrachter zugewandte Sichtseite sowie eine davon abgewandte Rückseite aufweist. Weiter weist das erfindungsgemäße Anzeigeelement eine sichtseitige, d.h. zu der Sichtseite hin angeordnete, lichtdurchlässige Trägerschicht sowie dazu rückseitig, d.h. dazu zu der Rückseite hin, angeordnet eine insbesondere lichtundurchlässige Randschicht und eine insbesondere ebenfalls lichtundurchlässige Maskierungsschicht auf. Sowohl die Randschicht als auch die Maskierungsschicht können intransparent bzw. lichtundurchlässig und weiter insbesondere schwarz sein. Die Maskierungsschicht kann dabei im Weiteren näher erläuterte Ausnehmungen aufweisen, durch welche lichtdurchlässige Bereiche der Maskierungsschicht definiert werden. Sowohl für die Randschicht als auch für die Maskierungsschicht gilt jedoch, dass das Material aus welchem die jeweilige Schicht gebildet ist, vorzugsweise lichtundurchlässig ist oder in bzw. zu einem lichtundurchlässigen Verbund angeordnet ist. Die Trägerschicht ist lichtdurchlässig bzw. transluzent und vorzugsweise vollständig transparent. Die Randschicht umläuft die Maskierungsschicht zumindest teilweise und insbesondere vollständig eine Umrandung bzw. Umrahmung der Maskierungsschicht bildend und überlappt mit ihr, wodurch eine Überlappung bzw. ein Überlappungsbereich gebildet wird, sodass an der Sichtseite des Anzeigeelements durch die Maskierungsschicht ein Anzeigebereich und durch die Randschicht ein Randbereich bestimmt werden, welche an der Sichtseite im Bereich ihrer Überlappung einen Übergangsbereich bilden. In diesem Übergangsbereich gehen der Anzeigebereich und der Randbereich optisch ineinander über. Gemäß der Erfindung ist vorgesehen, dass die Randschicht angrenzend an die Maskierungsschicht einen sich zu der Maskierungsschicht hin von einer ersten Dicke zu einer zweiten Dicke d.h. in eine Dickenrichtung verjüngenden ersten Abschnitt und einen daran und insbesondere zu der Maskierungsschicht hin anschließenden zweiten Abschnitt zweiter Dicke aufweist, welcher dadurch einen an die Maskierungsschicht angrenzenden Innenrandabschnitt der Randschicht bilden kann. Dabei überlappt die Maskierungsschicht zumindest den zweiten Abschnitt wenigstens teilweise und vorzugsweise vollständig. Ferner ist klarstellend darauf hinzuweisen, dass es sich bei dem zweiten Abschnitt nicht um einen infenitesimal kleinen Abschnitt handelt und der erste Abschnitt an seiner mit der zweiten Dicke endenden Seite entsprechend selbst nicht dem Innenrandabschnitt bzw. dem zweiten Abschnitt entspricht.

Vorzugsweise gilt, dass der Bereich der Randschicht, welcher die erste Dicke aufweist, lichtundurchlässig ist, sodass die Lichtdurchlässigkeit in dem ersten Abschnitt der Randschicht durch die sich reduzierende Dicke erhöht wird und der Bereich der Randschicht mit der zweiten Dicke bzw. der zweite Abschnitt der Randschicht lichtdurchlässig ist. Die sich dadurch ergebende Lichtdurchlässigkeit wird durch die rückseitig dazu angeordnete vorzugsweise lichtundurchlässige Maskierungsschicht kompensiert, sodass sich trotz der Reduktion der Dicke der Randschicht in dem ersten Abschnitt eine Lichtundurchlässigkeit des Verbunds aus Randschicht und Maskierungsschicht ergibt. Alternativ kann jedoch auch gelten, dass auch der zweite Abschnitt bzw. der die zweite Dicke aufweisende Abschnitt lichtdicht bzw. lichtundurchlässig ist, was entsprechend auch für den gesamten ersten Abschnitt und für den gesamten, die erste Dicke aufweisenden Abschnitt gilt.

Als Dicke wird dabei insbesondere die Materialstärke der jeweiligen Schicht verstanden. Alternativ kann die Dicke auch durch die Erstreckung orthogonal zu einer sichtseitigen Oberfläche des Anzeigeelements verstanden werden. Eine im Weiteren genannte Breite entspricht der jeweiligen Erstreckung orthogonal zu der Dicke.

Soweit nicht ohnehin klar, kann vorgesehen sein, dass sowohl die Randschicht als auch die Maskierungsschicht zumindest abschnittsweise unmittelbar an der Trägerschicht und unmittelbar aneinander anliegen.

Vorzugsweise beträgt die erste Dicke ein Vielfaches der zweiten Dicke bzw. die zweite Dicke einen Bruchteil der ersten Dicke. Beispielsweise kann die erste Dicke dem 3- bis 5-fachen der zweiten Dicke entsprechen.

Hinzukommt, dass eine Breite des ersten Abschnitts vorzugsweise zumindest der ersten Dicke bis zu der 4-fachen ersten Dicke entsprechen kann, sodass die Verjüngung einen flachen Winkel kleiner 45° besitzt und an der Sichtseite des Anzeigeelements einen optisch gleichmäßigen Übergang bildet.

Eine vorteilhafte Weiterbildung sieht vor, dass die Maskierungsschicht den ersten Abschnitt zumindest teilweise und insbesondere zumindest bis zu einer vorzugsweise im Querschnitt betrachteten geometrischen Mitte des ersten Abschnitts bzw. einer geometrischen Mitte in Breitenrichtung überlappt.

Alternativ kann jedoch auch vorgesehen sein, dass die Maskierungsschicht den ersten Abschnitt bis zu einem außermittigen Punkt und beispielsweise zu 1/3 oder 2/3 der Breite des ersten Abschnitts überlappt.

Weiter ist die Maskierungsschicht gemäß einer vorteilhaften Weiterbildung und insbesondere im Bereich der Überlappung rückseitig der Randschicht angeordnet.

Die Randschicht kann sich bis zu der zweiten Dicke bzw. bis zu einer der zweiten Dicke entsprechenden Tiefe in die Trägerschicht hineinerstrecken bzw. in die Trägerschicht eingebettet sein. Dabei bildet der zweite Abschnitt der Randschicht zusammen mit der Trägerschicht rückseitig eine insbesondere ebene Fläche, auf welcher die Maskierungsschicht angeordnet ist.

Vorzugsweise weist der zweite Abschnitt eine Breite auf, welche im Wesentlichen der zweiten Dicke entspricht. Wie erwähnt, ist als Breite die Erstreckung orthogonal zu der Dicke zu verstehen.

Weiter kann die zweite Dicke und/oder die Breite des zweiten Abschnitts insbesondere zwischen 1,0 und 0,1 mm, weiter insbesondere 0,5 und 0,3 mm und weiter insbesondere 0,4 mm betragen.

Besonders bevorzugt ist entsprechend eine Variante, bei welcher der zweite Abschnitt sowohl eine Dicke als auch eine Breite von 0,4 mm aufweist.

Die zweite Dicke kann ferner 0,5 bis 2,5 mm weiter insbesondere 1,0 bis 2,0 mm und besonders bevorzugt 1, 5 mm betragen, wobei die zweite Dicke jeweils größer ist, als die erste Dicke.

Die Randschicht ist gemäß einer vorteilhaften Weiterbildung aus einem Kunststoffmaterial und insbesondere aus PMMA, PA, PC oder ABS hergestellt. Zusätzlich oder alternativ kann die Randschicht durch Hinterspritzen der Trägerschicht hergestellt sein.

Die Maskierungsschicht kann zudem durch insbesondere mehrfachen und weiter insbesondere flächigen Farbauftrag mehrschichtig, d.h. mehrere Schichten aufweisend, gebildet sein. Dabei kann die Maskierungsschicht insbesondere im Digitaldruck-, Tampondruck-, Siebdruck- oder Lackierverfahren hergestellt sein. Dabei gilt, dass durch das jeweilige Verfahren mehrere Lagen aufgetragen werden können, bis die Maskierungsschicht lichtundurchlässig ist. Der erste Abschnitt der Randschicht kann dabei zudem einen Bereich bilden, gegen welchen bzw. an welchen ein Druckwerkzeug und insbesondere ein bei einem Tampondruckverfahren verwendetes Tampon deformiert werden kann.

Wie bereits erwähnt, kann vorgesehen sein, dass die Maskierungsschicht Symbole bildende Ausnehmungen und/oder Durchlässe für Anzeige- und/oder Bedienelemente bildende Ausnehmungen aufweist, welche insbesondere durch Lasern gebildet sind. Zusätzlich oder alternativ können die Ausnehmungen jedoch auch bereits bei der Herstellung der Maskierungsschicht berücksichtigt und beispielsweise bei einem Farbauftrag bzw. bei dem Digitaldruckverfahren, dem Tampondruckverfahren, dem Siebdruckverfahren oder dem Lackierverfahren frei bleiben bzw. frei gelassen werden.

Weiter kann auch vorgesehen sein, dass die Maskierungsschicht elektrisch leitfähig ist bzw. aus einer elektrisch leitfähigen Farb- oder Lackschicht gebildet ist. Durch die elektrische Leitfähigkeit kann die Maskierungsschicht beispielsweise als Teil eines Sensors oder zur Kontaktierung weiterer elektrischer Elemente verwendet werden.

Rückseitig der Randschicht kann hierbei zumindest ein die Maskierungsschicht insbesondere im Bereich der Überlappung elektrisch kontaktierender Anschluss vorgesehen sein, welcher weiter insbesondere durch ein Leitblech gebildet wird. Das Leitblech bzw. allgemein der Anschluss erstreckt sich dabei vorzugsweise nicht in den Anzeigebereich hinein und/oder ist vollständig indem Randbereich angeordnet.

Zum Verhindern eines Materialverzugs bei der Herstellung und Erhöhung der Stabilität für die Montage, kann vorgesehen sein, dass die Randschicht insbesondere an einem von der Maskierungsschicht beabstandeten Außenrandabschnitt einen Kragen ausbildet, welcher sich entsprechend vorzugsweise von der Sichtseite weg erstreckt.

Sichtseitig der Trägerschicht kann zudem eine lichtdurchlässige bzw. transparente Schutzschicht vorgesehen sein, welche die Sichtseite des Anzeigeelementes bestimmt, die Trägerschicht vollständig abdeckt und diese bis zu oder bis über die Randschicht umgreifen kann. Die Schutzschicht kann dabei insbesondere durch einen Kratzschutzlack gebildet sein.

Rückseitig der Maskierungsschicht kann ferner und insbesondere Ausnehmungen der Maskierungsschicht überdeckend eine transluzente und entsprechend zumindest teilweise lichtdurchlässige Symbolschicht vorgesehen bzw. unmittelbar auf der Maskierungsschicht angeordnet sein. Die Symbolschicht weist beispielsweise eine rote, weiße oder eine andere Farbe auf und kann ebenfalls im Tampon-, Siebdruck- oder Lackierverfahren hergestellt sein.

Um bei der Herstellung einerseits ein vollständiges und blasenfreies Anhaften der Materialien der Trägerschicht und der Randschicht gewährleisten zu können und andererseits den Übergang zusätzlich zu kaschieren, ist vorzugsweise weiter vorgesehen, dass die Randschicht in ihrem zweiten Abschnitt und insbesondere eine zu der Sichtseite und/oder eine zu der Rückseite weisende Kante des zweiten Abschnitts der Randschicht eine Fase oder Abrundung bzw. Rundung aufweist. Besonders vorteilhaft ist dabei, wenn die zu der Sichtseite weisende Kante bzw. Außenkante des zweiten Abschnitts, welche also von der Trägerschicht umgeben ist, eine Fase oder Rundung aufweist. Da die Randschicht durch Hinterspritzen der Trägerschicht hergestellt werden kann, kann das Negativ einer solchen Fase oder Abrundung in der Trägerschicht vorgesehen sein.

Die vorstehend offenbarten Merkmale sind beliebig kombinierbar, soweit dies technisch möglich ist und diese nicht im Widerspruch zueinander stehen.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigen:
- Fig. 1: ein Anzeigeelement gemäß dem Stand der Technik aus sichtseiti-ger Perspektive;
- Fig. 2: das Anzeigeelement gemäß Figur 1 im Querschnitt entlang der Schnittlinie A-A;
- Fig. 3: ein erfindungsgemäßes Anzeigeelement aus sichtseitiger Per-spektive;
- Fig. 4: eine erste Variante eines Anzeigeelements gemäß Figur 3 im Querschnitt entlang der Schnittlinie B-B;
- Fig. 5: eine zweite Variante eines Anzeigeelements gemäß Figur 3 im Querschnitt entlang der Schnittlinie B-B;
- Fig. 6: eine Detailansicht einer zu dem Anzeigebereich weisenden Seite der Randschicht.

Die Figuren sind beispielhaft schematisch. Gleiche Bezugszeichen in den Figuren weisen auf gleiche funktionale und/oder strukturelle Merkmale hin.

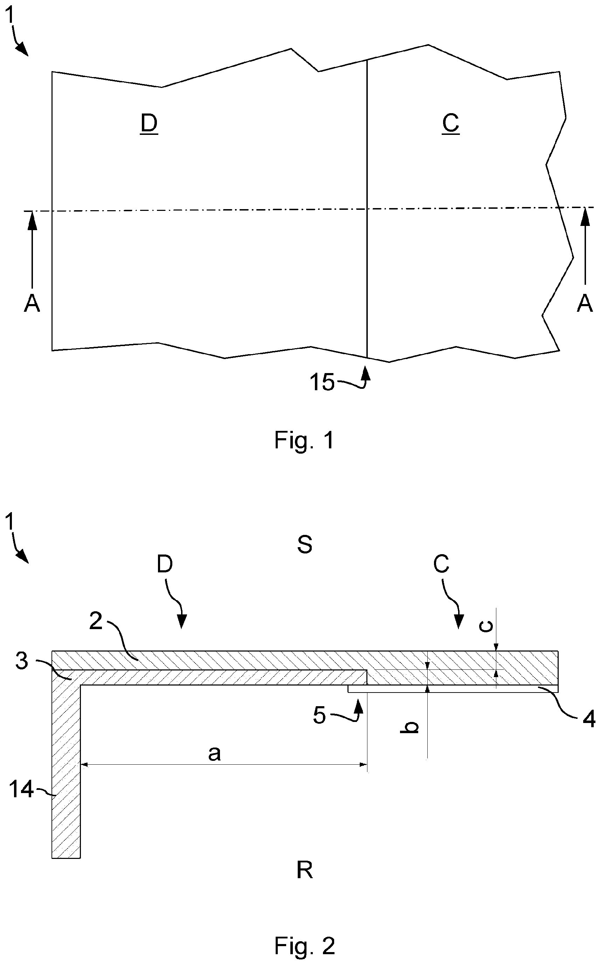

In den Figuren 1 und 2 ist ein aus dem Stand der Technik bekanntes Anzeigeelement 1 zur Illustrierung des sichtbaren Übergangs 15 zwischen einem sichtseitigen Randbereich D und einem sichtseitigen Anzeigebereich C abgebildet. Dabei besitzt ein solches Anzeigeelement 1 einen Aufbau, bei welchem an einer zu einer Rückseite R des Anzeigeelements 1 weisenden Seite einer Trägerschicht 2 eine Randschicht 3 und eine Maskierungsschicht 4 angeordnet sind, welche einander in einem Überlappungsbereich bzw. eine Überlappung 5 bildend überlappen.

Da sowohl die Maskierungsschicht 4 als auch die Randschicht 3 blickdicht d.h. lichtundurchlässig bzw. aus einem lichtundurchlässigen Material gebildet sind, ergibt sich von der Sichtseite S des Anzeigeelements 1 eine durch das transparente Material der Trägerschicht 2 hindurch deutlich sichtbare Kante bzw. ein deutlich sichtbarer Übergang 15 an der Überlappung 5, was zu einer wenig ansprechenden Optik führt.

Dabei führen auch Änderungen an den Maßen der einzelnen Schichten, d.h. der Trägerschicht 2, der Randschicht 3 oder der Maskierungsschicht 4, in zulässigen und die Stabilität des Anzeigeelements 1 nicht gefährdenden Bereichen zu keinen Verbesserungen bei der Kaschierung der Kante 15.

In dem dargestellten Beispiel beträgt die Breite a der Randschicht 3 zwischen 10,0 und 20,0 mm bzw. insbesondere 15,0 mm. Die Dicke b der Randschicht 3 beträgt zwischen 0,6 und 1,0 mm und insbesondere 0,8 mm. Die Dicke c der Trägerschicht 2 oberhalb bzw. in Dickenrichtung angrenzend an die Randschicht 3 beträgt zwischen 0,5 und 1,5 mm und insbesondere 1,0 mm. Die nicht näher bezeichnete Dicke der Maskierungsschicht 4 kann abhängig des gewählten Herstellungsverfahrens wenige µ betragen, wobei die Dicke der Maskierungsschicht 4 abhängig von Material und Farbe derart gewählt wird, dass die Maskierungsschicht 4, abgesehen von eventuell bestimmungsgemäß vorgesehenen Ausnehmungen, lichtundurchlässig ist.

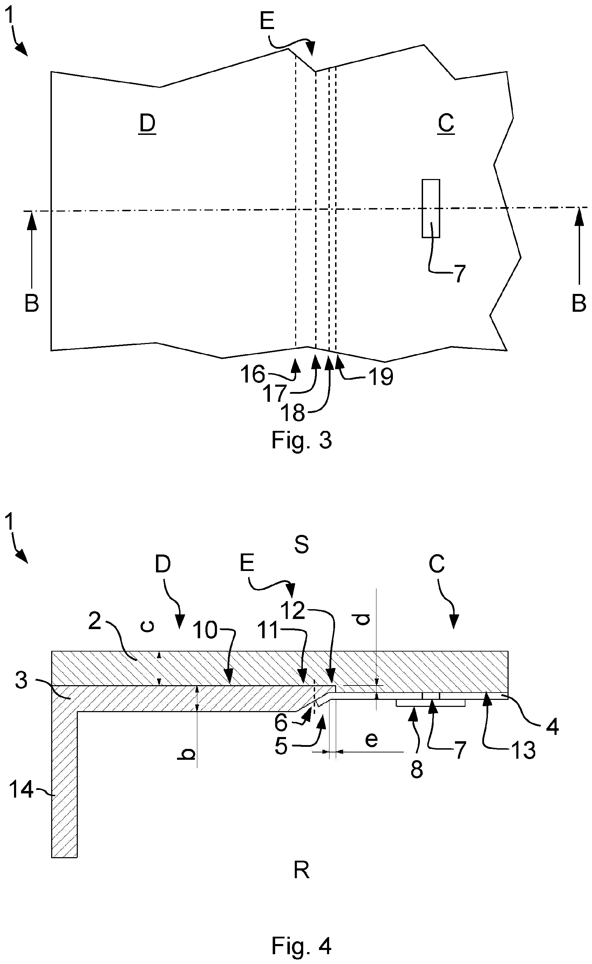

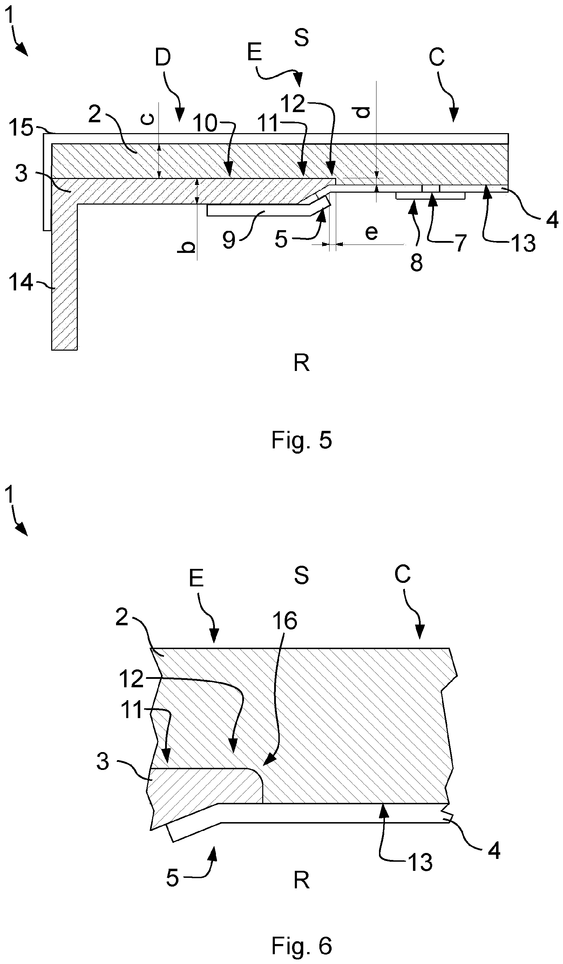

In den Figuren 3 und 4 ist eine erfindungsgemäße Ausführung eines Anzeigeelements 1 dargestellt, wobei die Figur 5 eine alternative Variante eines erfindungsgemäßen Anzeigeelements 1 zeigt, welche jedoch von der Sichtseite S betrachtet im Wesentlichen der Darstellung der Figur 3 entspricht, sodass diesbezüglich Beschriebenes identisch gilt.

Für die in den Figuren 3 bis 5 dargestellten Anzeigeelemente 1 gilt, dass diese ebenfalls eine Sichtseite S und eine Rückseite R aufweisen, sowie im Wesentlichen aus drei Schichten gebildet sind. Sichtseitig ist eine transparente bzw. lichtdurchlässige Trägerschicht 2 und rückseitig zu dieser eine Randschicht 3 und eine Maskierungsschicht 4 vorgesehen. Die Randschicht 3 und die Maskierungsschicht 4 sind jeweils lichtundurchlässig bzw. aus lichtundurchlässigen Materialien hergestellt. In der Maskierungsschicht 4 können jedoch mehrere und vorliegend eine lichtdurchlässige Ausnehmung 7 ausgebildet und beispielsweise durch Lasern oder im Rahmen der Herstellung der Maskierungsschicht 4 vorgesehen sein. Die Ausnehmungen 7 können selbst Symbole oder beispielsweise eine Statusanzeige einer Funktion bilden, sodass durch eine rückseitige Hinterleuchtung mittels eines Leuchtmittels eine Anzeige an der Sichtseite S des Anzeigeelements 1 ermöglicht wird.

Um ein optisch ansprechendes d.h. ästhetisches Erscheinungsbild zu bieten, soll der Übergang d.h. der Übergangsbereich E zwischen dem sichtseitig durch die Randschicht 3 gebildeten Randbereich D und dem sichtseitig durch die Maskierungsschicht 4 gebildeten Anzeigebereich C für das unbewehrte Auge "unsichtbar" bzw. nahtlos erscheinen. Mit einer Lupe, einem Mikroskop oder anderen Mitteln, kann ein Übergang innerhalb des Übergangsbereichs E jedoch möglichweise weiter sichtbar sein.

Wesentlich ist dabei die Geometrie der Randschicht 3 im Bereich der Überlappung 5. Um eine ausreichend hohe Stabilität zu gewähren, weißt ein von der Maskierungsschicht 4 beabstandeter und den Außenrand der Randschicht 3 bildender Außenrandabschnitt 10 eine erste Dicke b im Bereich von beispielswiese zwischen 1,0 und 2,0 mm und hier 1,5 mm auf. Weiter bildet die Randschicht 3 angrenzend an die Maskierungsschicht 4 einen sich zu der Maskierungsschicht 4 hin von der ersten Dicke b zu einer zweiten Dicke d von zwischen 1,0 und 0,1 mm und hier 0,4 mm verjüngenden ersten Abschnitt 11 und einen daran anschließenden zweiten Abschnitt 12 gleichbleibender zweiter Dicke d. Durch die Verjüngung im zweiten Abschnitt 12, wird die Dicke und dadurch optional auch die Lichtundurchlässigkeit in diesem Bereich bis zu dem zweiten Abschnitt 12 stetig reduziert und in dem zweiten Abschnitt 12 entsprechend der zweiten Dicke d gehalten, wobei diese Reduktion durch die rückseitig angeordnete Maskierungsschicht 4 zumindest teilweise kompensiert wird, sodass der Verbund aus Randschicht 3 und Maskierungsschicht 4 in seiner Gesamtheit weiter lichtundurchlässig ist und an der Sichtseite einen nahezu d.h. mit dem unbewehrten Auge nicht wahrnehmbaren Übergang bildet.

Weiter ist vorliegend vorgesehen, dass die Breite e des zweiten Abschnitts 12 der Dicke d des zweiten Abschnitts 12 und hier 0,4 mm entspricht. Dadurch ist die Randschicht 3 an ihrem durch den zweiten Abschnitt 12 gebildeten Innenrandabschnitt einerseits ausreichend stabil um ein Ausfransen bei der Herstellung zu verhindern und andererseits ausreichend dünn, um zusammen mit der dazu unmittelbar und rückseitig angeordneten Maskierungsschicht eine Kaschierung des Übergangs zu bilden. Durch die benachbarte rampenartige bzw. lineare Verdickung im ersten Abschnitt 11, wird von dem Anzeigebereich C stufenlos und gleichmäßig in den durch die Randschicht 3 bestimmten Randbereich D übergeblendet.

Vorteilhaft ist hierfür ferner, dass sich die Maskierungsschicht 4 bis zu einer im Querschnitt gemäß Figuren 4 oder 5 betrachteten geometrischen Mitte 6 erstreckt, in welchem die Randschicht 3 ausreichend dick ist, um den dadurch bestimmten Außenrandabschnitt der Maskierungsschicht 4 an der Sichtseite nicht mehr mit dem unbewehrten Auge wahrnehmen zu können.

Obwohl die Dicke c der Trägerschicht 2 angrenzend an die Randschicht 3 grundsätzlich identisch zu den Figuren 1 und 2 gewählt werden kann, wurde vorliegend eine Dicke zwischen 1,5 und 2,5 mm und hier genauer 2,0 mm gewählt. Dadurch wird an der Trägerschicht 2 ein zusätzlicher Tiefeneffekt erzeugt, welcher die Wahrnehmung von Übergängen zwischen Anzeigebereich C und Randbereich D weiter erschwert.

Zur Anzeige können in der Maskierungsschicht 4, wie bereits erläutert, die in den Figuren 3 bis 5 dargestellten Ausnehmungen 7 vorgesehen sein. Rückseitig kann auf die Maskierungsschicht 4 eine die Ausnehmungen 7 überlagernde bzw. vollständig abdeckende transluzente und entsprechend zumindest teilweise lichtdurchlässige Symbolschicht 8 vorgesehen sein, durch deren Farbgebung eine sichtseitig in der Ausnehmung 7 sichtbare Farbe bereitgestellt wird.

Zur Verstärkung des Außenrandabschnitts 10 der Randschicht 3 und damit um sowohl einen Materialverzug zu verhindern als auch eine einfachere Befestigung des Anzeigeelements 1 an einem nicht dargestellten Träger zu erleichtern, ist an dem Außenrandabschnitt 10 bzw. an dem Außenrand der Randschicht 3 ein Kragen 14 vorgesehen, welcher gegenüber einer durch die Maskierungsschicht 4 bestimmten Ebene auskragt bzw. orthogonal ist.

Die in Figur 5 abgebildete Variante berücksichtigt ferner zwei weitere Merkmale des erfindungsgemäß vorgeschlagenen Anzeigeelements 1, welche einzeln oder gemeinsam vorgesehen sein können. Gemäß der Variante der Figur 5 ist einerseits sichtseitig der Trägerschicht 2 eine aus einem Kratzschutzlack ausgebildete Schutzschicht 15 vorgesehen, welche vorzugsweise die gesamte Sichtseite S der Trägerschicht 2 abdeckt bzw. die Sichtseite S des Anzeigeelements 1 bestimmt. Andererseits ist die Maskierungsschicht 4 aus einem elektrisch leitfähigem Material gebildet und im Bereich der Überlappung 5 durch einen Anschluss 9 kontaktiert. Der Anschluss 9 ist beispielsweise durch ein Leitblech gebildet und ausschließlich angrenzend an die Randschicht 3 bzw. den Randbereich D angeordnet, sodass der Anschluss 9 sich nicht bis in den Anzeigebereich C erstreckt.

In Figur 6 ist eine vergrößerte Darstellung eines Übergangsbereichs E eines Anzeigeelements 1 dargestellt, wobei diese den Varianten gemäß den Figuren 3 bis 5 entsprechen kann.

Dabei ist vorgesehen, dass eine sichtseitige Außenkante des zweiten Abschnitts 12 der Randschicht 3 d.h. eine zu der Sichtseite S weisende Kante der Randschicht 3 abgerundet ist, wobei durch die Abrundung 16 einerseits sichergestellt wird, dass die Randschicht 3 vollständig an der Trägerschicht 2 anliegt und sich keine Hohlräume oder Blasen zwischen diesen bilden, und andererseits die ansonsten sichtseitige Kante bzw. der Übergang von Randschicht 3 zu Maskierungsschicht 4 weiter kaschiert wird.

Die Erfindung beschränkt sich in ihrer Ausführung nicht auf die vorstehend angegebenen bevorzugten Ausführungsbeispiele. Vielmehr ist eine Anzahl von Varianten denkbar, welche von der dargestellten Lösung auch bei grundsätzlich anders gearteten Ausführungen Gebrauch macht.

## Patentansprüche

1. Anzeigeelement (1) für ein Kraftfahrzeug,
aufweisend eine Sichtseite (S) sowie eine davon abgewandte Rückseite (R),
ferner aufweisend eine sichtseitige lichtdurchlässige Trägerschicht (2) sowie dazu rückseitig angeordnet eine Randschicht (3) und eine Maskierungsschicht (4),
wobei die Randschicht (3) die Maskierungsschicht (4) zumindest teilweise eine Umrandung der Maskierungsschicht (4) bildend umläuft und mit ihr überlappt, sodass an der Sichtseite (S) durch die Maskierungsschicht (4) ein Anzeigebereich (C) und durch die Randschicht (3) ein Randbereich (D) bestimmt werden, welche an der Sichtseite im Bereich ihrer Überlappung (5) einen Übergangsbereich (E) bilden,
**dadurch gekennzeichnet, dass**
die Randschicht (3) angrenzend an die Maskierungsschicht (4) einen sich zu der Maskierungsschicht (4) hin von einer ersten Dicke (b) zu einer zweiten Dicke (d) verjüngenden ersten Abschnitt (11) und einen daran anschließenden zweiten Abschnitt (12) zweiter Dicke (d) aufweist,
wobei die Maskierungsschicht (4) zumindest den zweiten Abschnitt (12) wenigstens teilweise überlappt.

2. Anzeigeelement nach Anspruch 1,
wobei die Maskierungsschicht (4) den ersten Abschnitt (11) zumindest teilweise überlappt.

3. Anzeigeelement nach Anspruch 1 oder 2,
wobei die Maskierungsschicht (4) rückseitig der Randschicht (3) angeordnet ist.

4. Anzeigeelement nach einem der vorhergehenden Ansprüche,
wobei die Randschicht (3) sich bis zu der zweiten Dicke (d) in die Trägerschicht (2) hineinerstreckt
und der zweite Abschnitt (12) der Randschicht (3) zusammen mit der Trägerschicht (2) rückseitig eine Fläche (13) bildet, auf welcher die Maskierungsschicht (4) angeordnet ist.

5. Anzeigeelement nach einem der vorhergehenden Ansprüche,
wobei der zweite Abschnitt (12) eine Breite (e) aufweist, welche im Wesentlichen der zweiten Dicke (d) entspricht.

6. Anzeigeelement nach einem der vorhergehenden Ansprüche,
wobei die zweite Dicke (d) zwischen 1,0 und 0,1 mm, insbesondere zwischen 0,5 und 0,3 mm und weiter insbesondere 0,4 mm beträgt.

7. Anzeigeelement nach einem der vorhergehenden Ansprüche,
wobei die Randschicht (3) aus einem Kunststoffmaterial und/oder durch Hinterspritzen der Trägerschicht (2) hergestellt ist.

8. Anzeigeelement nach einem der vorhergehenden Ansprüche,
wobei die Maskierungsschicht (4) durch mehrfachen Farbauftrag mehrschichtig gebildet ist.

9. Anzeigeelement nach einem der vorhergehenden Ansprüche,
wobei die Maskierungsschicht (4) Symbole und/oder Durchlässe für Anzeige- und/oder Bedienelemente bildende Ausnehmungen (7) aufweist.

10. Anzeigeelement nach einem der vorhergehenden Ansprüche,
wobei die Maskierungsschicht (4) elektrisch leitfähig ist.

11. Anzeigeelement nach dem vorhergehenden Anspruch,
wobei rückseitig der Randschicht (3) zumindest ein die Maskierungsschicht (4) elektrisch kontaktierender Anschluss (9) vorgesehen ist.

12. Anzeigeelement nach dem vorhergehenden Anspruch,
wobei die Randschicht (3) einen die Randschicht versteifenden Kragen (14) ausbildet.

13. Anzeigeelement nach einem der vorhergehenden Ansprüche,
wobei die Randschicht (3) in ihrem zweiten Abschnitt (12) und insbesondere eine zu der Sichtseite (S) und/oder eine zu der Rückseite (R) weisende Kante des zweiten Abschnitts (12) der Randschicht (3) eine Fase oder Abrundung (16) aufweist.
